(19) Europäisches Patentamt / European Patent Office / Office européen des brevets

(11) **EP 2 507 652 B1**

(12) **FASCICULE DE BREVET EUROPEEN**

(45) Date de publication et mention
de la délivrance du brevet:
**18.09.2013 Bulletin 2013/38**

(21) Numéro de dépôt: **10785414.3**

(22) Date de dépôt: **30.11.2010**

(51) Int Cl.:
**G01T 7/00** (2006.01)

(86) Numéro de dépôt international:
**PCT/EP2010/068528**

(87) Numéro de publication internationale:
**WO 2011/067251 (09.06.2011 Gazette 2011/23)**

(54) **PROCÉDÉ D'ÉTALONNAGE D'UN DÉTECTEUR DE RAYONNEMENT X**

VERFAHREN ZUR KALIBRIERUNG EINES RÖNTGENDETEKTORS

METHOD FOR CALIBRATING AN X-RAY DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2009 FR 0905794**

(43) Date de publication de la demande:
**10.10.2012 Bulletin 2012/41**

(73) Titulaire: **Commissariat à l'Énergie Atomique et aux Énergies Alternatives 75015 Paris (FR)**

(72) Inventeurs:
• **GLASSER, Francis**
**F-38320 Eybens (FR)**
• **GARCIN, Michel**
**F-38250 Saint Nizier du Moucherotte (FR)**

(74) Mandataire: **Bréda, Jean-Marc et al Marks & Clerk France Conseils en Propriété Industrielle Immeuble " Visium " 22, avenue Aristide Briand 94117 Arcueil Cedex (FR)**

(56) Documents cités:
**EP-A2- 1 840 597    WO-A2-2008/065564
WO-A2-2009/122317    US-B1- 7 479 639**

**Description**

Le domaine de l'invention est celui des détecteurs matriciels de rayonnement X à comptage de photons. Plus précisément, l'invention concerne un procédé d'étalonnage des pixels de la matrice constituant le détecteur.

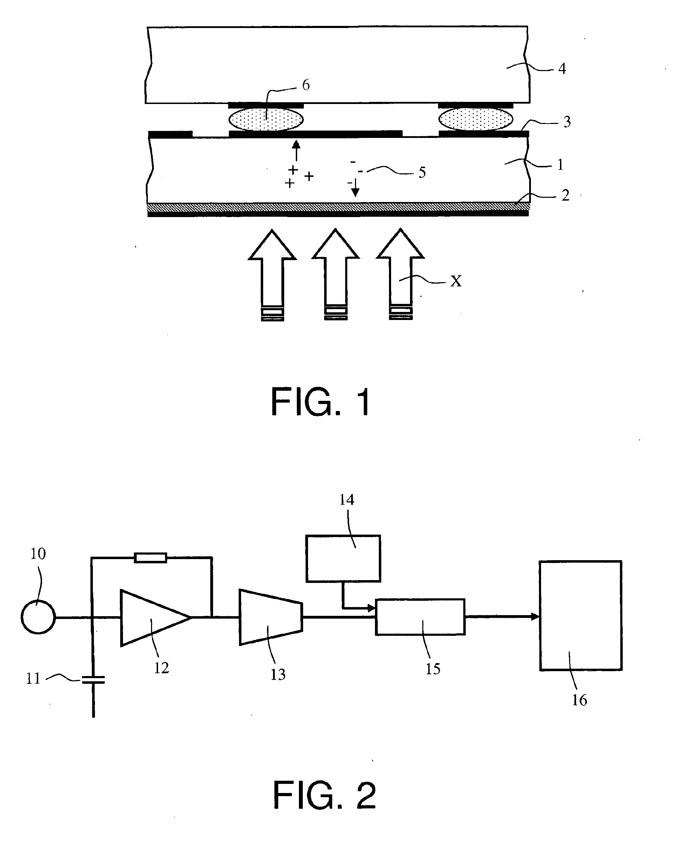

Les détecteurs de rayonnement X de type semi-conducteur monolithique, comportent, comme illustré sur la figure 1, un substrat plan 1 en matériau semi-conducteur. Le matériau détecteur peut être de la famille des détecteurs semi-conducteurs à température ambiante. On citera notamment le CdTe, le CdZnTe, le GaAs, le TIBr, le $HgI_2$ ou le CdMnTe.

Ce substrat 1 comporte, sur une de ses faces, une matrice de premières électrodes 2, polarisées positivement et, sur la face opposée, une matrice d'électrodes polarisées négativement 3. Chaque pixel est ainsi constitué par une anode élémentaire reliée à son électronique de traitement. La dimension typique d'un pixel, définie par la distance de répétition des électrodes peut aller de quelques dizaines de microns à quelques centaines de microns.

Lorsqu'un photon X dont l'énergie est située dans la bande d'énergie de quelques keV à une centaine de keV traverse un pixel en matériau semi-conducteur, il crée un certain nombre de paires électronstrous 5 par ionisation des atomes du cristal semi-conducteur. Ces charges sont captées par les électrodes du pixel, et génèrent; durant leur parcours des impulsions électriques au niveau de ces électrodes. Ces impulsions sont comptabilisées par un circuit intégré 4 de type « ASIC », acronyme signifiant « Application Specific integrated Circuit ». Le matériau d'interconnexion 6 entre le substrat et l' « ASIC » dépend de la dimension des pixels. On utilise avantageusement de l'indium ou tous métaux à faible température de fusion, typiquement inférieure à 150°C pour des faibles dimensions ou des colles polymères conductrices pour des dimensions plus importantes.

Pour une matrice de détection de rayonnement utilisant le principe du comptage, l'impulsion émise par le pixel élémentaire est amplifiée, puis comparée à un seuil pour décider si l'impulsion est comptée ou non. L'amplitude de ce seuil va définir l'amplitude de l'impulsion et donc théoriquement l'énergie cédée dans le détecteur par le photon incident. Dans le cas d'un système de comptage multi-énergie, on ajuste les différents seuils afin qu'ils correspondent chacun à une énergie précise. On définit ainsi des bandes d'énergie et des images correspondantes à ces bandes. Ces images sont notamment utilisées dans des dispositifs d'imagerie d'agents de contraste ou de différents types de tissus ou dans la détection d'explosifs dans le cas de contrôle de bagages.

Pour une matrice de quelques milliers de pixels, la sensibilité de réponse du système de comptage en fonction de la position de ce seuil peut être assez importante d'un pixel à l'autre, entraînant des inhomogénéités de réponse. Différentes méthodes sont habituellement utilisées pour ajuster ces seuils.

Pour pallier, par exemple, une dérive en température de l'électronique de comptage, on utilise une injection électrique calibrée à l'ensemble des pixels et l'ajustement se fait en faisant un balayage en seuil de l'ensemble des pixels. Les seuils sont ensuite ajustés pour que tous les pixels ne retiennent finalement que les impulsions dont l'amplitude dépasse celle du signal injecté. Cette injection peut se faire au niveau de chaque pixel par un dispositif électronique dédié. Elle peut également se faire par l'intermédiaire de la capacité C du détecteur semi-conducteur connecté à chaque pixel. Il peut s'agir, par exemple, d'un détecteur CdTe connecté par bille d'indium à un « ASIC » de comptage. Le détecteur semi-conducteur est alors constitué d'une électrode de polarisation sur la face supérieure et sur la face inférieure d'une multitude d'électrodes connectées à l' « ASIC » de lecture, pixel à pixel. En appliquant une variation de tension rapide $\delta V$ sur l'électrode commune supérieure, on crée une impulsion électrique dont l'amplitude vaut $C.\delta V/\delta t$ au niveau de chaque petite électrode connectée à l'entrée de l'amplificateur de l'« ASIC » de comptage. Un mode de réalisation est présenté sur la figure 2. La chaîne électronique située à la sortie du pixel 10 comprend :

- une capacité 11 permettant d'injecter une quantité de charge dans la chaine d'amplification pour étalonner le système ;
- Un premier étage d'amplification 12 qui amplifie le paquet de charges provenant du détecteur 10 en faisant, dans ce cas de figure, une conversion courant-tension ;
- Des moyens électroniques 13 permettant de mettre en forme temporellement les signaux ;
- Des moyens électroniques 14 permettant, à partir d'un convertisseur digital/analogique, de définir une tension de seuil utile pour le comparateur ;
- Des moyens électroniques 15 assurant la fonction de comparaison de la tension en entrée avec la tension de seuil et fournissant un signal logique lorsque cette tension d'entrée est supérieure au seuil ;
- Des moyens électroniques 16 assurant les fonctions de comptage des impulsions logiques pendant un intervalle de temps donné puis de transmission du résultat sur un bus de lecture.

Le fonctionnement du dispositif est le suivant. Une tension de quelques volts est appliquée en amont de l'étage d'amplification 12 situé à la sortie du pixel 10 durant une durée de quelques nanosecondes à quelques dix nanosecondes, simulant ainsi le signal produit par une interaction d'un photon d'une certaine énergie dans le détecteur. On détermine ensuite l'amplitude du signal délivré par les différents moyens constituant l'électronique de lecture du pixel, et on aboutit à l'amplitude correspondant à l'impulsion "injectée" en amont du pixel. En réalisant cette opération pour l'ensemble des pixels du détecteur, il est possible de connaître, pour chaque pixel, l'amplitude correspondant à cette même impulsion. On considère ensuite que cette amplitude constitue le seuil de chaque pixel. On dispose alors d'un détecteur dont chaque pixel est « seuillé », chaque seuil correspondant à une même impulsion, donc à une même énergie déposée dans le détecteur.

Cependant, ce procédé de calibration présente certains inconvénients. En effet, la corrélation entre l'énergie déposée dans le détecteur et la durée et l'intensité de l'impulsion est difficile à établir. De plus, un tel procédé ne prend pas en compte les différences de transport et de collection de charges entre chaque pixel. En effet, deux pixels peuvent posséder des capacités électroniques identiques et des propriétés de transport de charges complètement différentes. De plus, les circuits électroniques, et en particulier les circuits de lecture, subissent une dérive thermique. Un seuil correspondant à une énergie donnée peut correspondre, au bout d'un certain temps, à une énergie différente. Cette opération, relativement fastidieuse, doit donc être répétée au cours du temps.

Pour réaliser une calibration plus fiable, il faut utiliser une source de rayonnement X ou gamma dont les caractéristiques sont connues. Pour avoir une correspondance entre l'amplitude d'impulsions produites par un détecteur et l'énergie correspondante de photons incidents, on peut calibrer le système avec des sources de rayonnement mono-énergétiques dont l'énergie est connue. Ces sources ne sont généralement pas très actives et la statistique reste insuffisante même avec des temps d'acquisition longs. Dans le cas d'un tube à rayon X, les énergies émises présentent un continuum entre une énergie minimum définie par la filtration du générateur, de l'ordre de 10 à 20 keV suivant les applications et une énergie maximum définie par la haute tension du générateur X. On peut utiliser l'énergie maximum comme référence pour la calibration. Mais ceci n'est pas facile lorsque les seuils doivent être ajustés à des valeurs de faible énergie, entre 10 et 40 keV par exemple car le nombre de photons émis par le générateur dans cette gamme d'énergie est alors très faible. De plus, les générateurs utilisés ne sont pas prévus pour émettre à des tensions situées dans la gamme de 10 à 40 kV. C'est le cas par exemple du scanner X. Une autre méthode décrite dans le brevet US 7 479 639 consiste à utiliser des sources de rayonnement d'énergie bien connu pour calibrer les seuils. Mais cette méthode est longue et nécessite la présence de sources irradiantes dans l'environnement du système de radiologie. Se pose alors le problème de la gestion de ces sources afin de satisfaire aux différentes normes de sécurité, d'autant plus que l'on doit disposer des sources les plus actives possibles si l'on souhaite réaliser une calibration correcte dans une durée raisonnable.

Le document WO2009/122317 décrit un procédé de calibration d'un système de détection de rayonnement X, ledit système comprenant au moins un générateur de rayonnement X et un ensemble de détection comprenant une matrice de pixels détecteurs semi-conducteurs et une électronique de traitement et de calibration, le procédé de calibration comportant, pour tout ou partie des pixels, les différentes étapes suivantes :

- Mise en fonctionnement du générateur à rayons X à sa haute tension nominale, le générateur étant disposé face au détecteur ;

- Comptage, par l'électronique de traitement et de calibration, des impulsions émises par chaque pixel sous l'effet du rayonnement produit par le générateur;

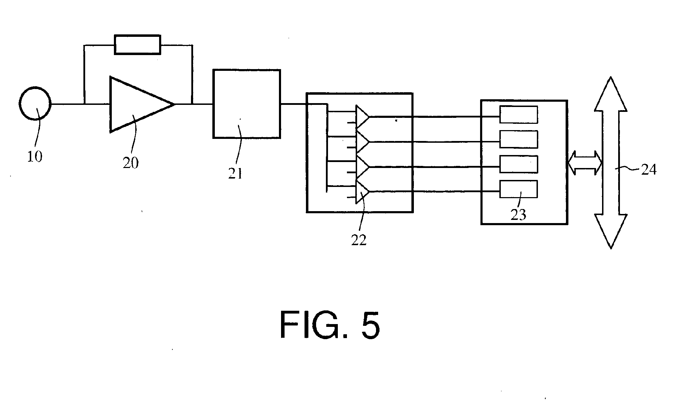

- Pour chaque pixel, classement des impulsions selon leur dépassement d'un seuil en amplitude et établissement d'une distribution cumulative correspondante (figure 5);

- Pour chaque distribution cumulative, application d'un algorithme visant à déterminer la valeur du seuil correspondant à la pente la plus élevée de la courbe représentative de la distribution cumulative (figure 6);

- Identification de l'amplitude correspondant à cette valeur de seuil;

- Ajustement, par l'électronique de traitement et de calibration, des paramètres de calibration de chaque pixel, tenant compte de la relation amplitude-énergie ainsi établie.

Cependant, le dispositif décrit dans ce document nécessite un matériau dont le rayonnement spectral est connu pour effectuer la calibration. On se reportera, en particulier, à la figure 1 de cette demande.

Le procédé selon l'invention ne présente pas ces inconvénients. Le procédé de calibration proposé utilise le générateur de rayonnement X présent dans les systèmes de détection de rayonnement X. On évite ainsi à la fois les inconvénients d'une calibration purement électronique qui ne permet pas d'étalonner l'intégralité de la chaîne de détection et d'une calibration comportant des sources étalon ou des matériaux étalons, nécessairement plus lourde à mettre en place. On obtient, pour chaque pixel, un seuil d'amplitude correspondant à une même énergie, par un procédé simple et rapide, en tenant compte du transport et de la collection des charges dans le matériau détecteur. Avantageusement, le procédé s'appuie sur des moyens présents sur le lieu d'utilisation du détecteur.

Plus précisément, l'invention a pour objet un procédé de calibration d'un système de détection de rayonnement X tel que défini dans la revendication 1.

Selon l'invention, l'indicateur statistique relatif à ladite distribution comprend la médiane ou tout autre fractile, ou la moyenne. L'indicateur statistique final peut également être une combinaison de différents indicateurs statistiques.

Selon un premier mode de réalisation, sur chaque pixel, la valeur d'énergie correspondant à l'amplitude du signal correspondant audit indicateur est traitée comme étant un seuil en énergie.

Selon un second mode de réalisation, sur chaque pixel, les impulsions dont l'amplitude est inférieure à un seuil déterminé ne sont pas traitées par l'électronique de lecture du pixel.

Selon un troisième mode de réalisation, un tel procédé permet de sélectionner, pour l'ensemble des pixels, au moins une fenêtre d'énergie, comprise entre un premier seuil et un second seuil, les impulsions correspondant à cette fenêtre étant séparées du reste des impulsions.

Avantageusement, cette opération est réalisée en considérant simultanément, pour chaque distribution, plusieurs indicateurs statistiques différents prédéterminés, ce qui permet d'aboutir à autant de seuils dans chacun de pixels considérés, chaque seuil correspondant alors à un desdits indicateurs statistiques.

Avantageusement, cette opération est réalisée pour l'ensemble des pixels d'un détecteur, mais elle peut être effectuée sur tout ou partie de ses pixels.

Avantageusement, le seuil de plus bas niveau est situé au-dessus du bruit électronique de l'électronique de traitement.

Avantageusement, la calibration est effectuée systématiquement entre deux mesures du système de détection.

L'invention sera mieux comprise et d'autres avantages apparaîtront à la lecture de la description qui va suivre donnée à titre non limitatif et grâce aux figures annexées parmi lesquelles :

La figure 1 représente le schéma d'une partie d'un détecteur à matrice de pixels semi-conducteur ;
La figure 2 représente une chaîne électronique de calibration selon l'art antérieur ;
La figure 3 représente les rayonnements X primaire et secondaire d'un détecteur à matrice de pixels semi-conducteur ;
La figure 4 représente le nombre d'impulsions détectées en fonction de la valeur du seuil ;
La figure 5 représente le schéma électronique d'une voie de comptage d'un système de détection mettant en oeuvre le procédé selon l'invention.

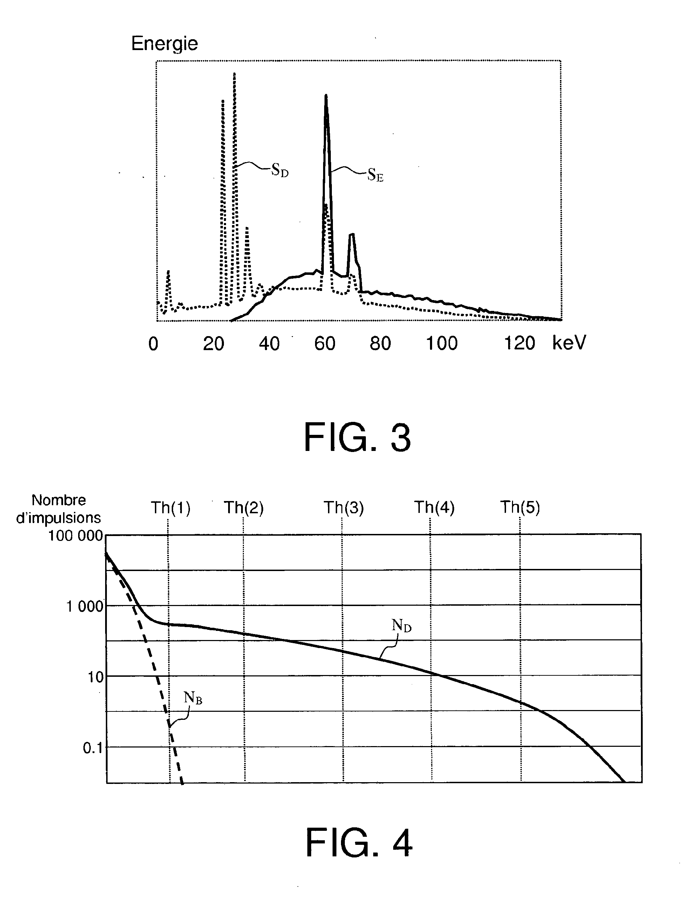

Le procédé de calibration selon l'invention met en oeuvre le générateur à rayons X présent dans la grande majorité des systèmes de détection de rayonnement X. Celui-ci est utilisé à sa haute tension nominale, c'est-à-dire entre 15 et 160 kV. Une particularité de la réponse des détecteurs semi-conducteurs, lors de l'interaction d'un photon incident avec un pixel détecteur, est qu'une partie de l'énergie peut-être convertie en photons de plus faible énergie, qui peuvent alors déposer leur énergie dans un pixel voisin. Pour un détecteur de volume donné, cet effet apparaît d'autant plus que le nombre de pixels est élevé, ce qui est le cas dans les détecteurs ayant une électrode divisée en petits pixels. On entend par petit pixel, un pixel dont les dimensions typiques définies par la distance de répétition des électrodes sont comprises entre quelques dizaines de microns à quelques centaines de microns. Lorsque l'interaction a lieu au voisinage du bord du pixel, il peut également y avoir un partage du nuage de charges crées entre plusieurs pixels adjacents. Ainsi, une multitude d'impulsions de faible amplitude provenant de chaque pixel est produite couvrant un spectre énergétique très large. La figure 3 est une illustration de ce phénomène. La courbe en traits pleins représente le spectre SE de l'énergie de la source, c'est-à-dire du rayonnement incident, en l'occurrence une cible en tungstène, la courbe en traits pointillés représente le spectre $S_D$ produit par un détecteur semi-conducteur en tellurure de cadmium (CdTe) dont l'anode est segmentée en petits pixels, ou électrodes élémentaires, tels que décrits ci-dessus. Les deux spectres sont représentés en fonction de l'énergie du rayonnement X en keV. Comme on le voit, ce second spectre $S_D$ comporte des raies spectrales aux basses énergies correspondant aux énergies libérées durant différentes interactions dans le détecteur, ainsi qu'au phénomène de partage de porteurs de charges entre pixels adjacents.

En comptant les impulsions émises par chaque pixel sous l'effet du rayonnement incident, en les classant selon leurs amplitudes sous la forme d'un histogramme, on obtient, pour chaque pixel, une distribution en amplitude de ces impulsions, l'axe des abscisses représentant l'amplitude, l'axe des ordonnées représentant le nombre d'impulsions comptées.

Le rayonnement incident, produit par un générateur de rayons X, peut-être considéré comme homogène du point de vue de son spectre en énergie comme du point de vue de son intensité. Aussi, lors de l'éclairement du détecteur par un tel rayonnement, chaque pixel est soumis à un rayonnement de spectre en énergie identique. Le détecteur étant considéré de bonne qualité, on peut estimer que la distribution en amplitude des impulsions comptées est analogue pour l'ensemble des pixels. Par analogue, on entend qu'elle a une forme et une intégrale comparable. Ceci est notamment dû au fait qu'il n'y a pas de grande différence de sensibilité entre les pixels, l'intégrale de cette distribution est également sensiblement égale pour l'ensemble des pixels.

Par contre, notamment du fait de circuits électroniques de lecture différents d'un pixel à un autre, cette distribution en amplitude peut subir, d'un pixel à un autre, une translation selon l'axe des amplitudes. Ainsi, des interactions ayant libéré la même énergie dans le détecteur peuvent générer des impulsions d'amplitudes différentes selon la localisation du pixel collectant les porteurs de charges générés par cette interaction. Sans correction particulière, la correspondance entre l'amplitude d'une impulsion et l'énergie à laquelle correspond cette impulsion n'est pas constante d'un pixel à un autre. Par énergie à laquelle correspond cette impulsion, on entend l'énergie déposée par l'interaction ayant générée cette impulsion.

Il est nécessaire de corriger cet effet de translation ou dérive, afin que, pour l'ensemble des pixels, la correspondance entre amplitude et énergie soit la même.

Dans le procédé selon l'invention, une telle correspondance est obtenue en déterminant, sur chaque distribution relative à chaque pixel, un critère, par exemple un indicateur statistique.

Selon le mode préféré de réalisation, cet indicateur est un fractile à N %, c'est-à-dire une valeur en deçà de laquelle sont classées N % des impulsions comptées, le fractile à 50% correspondant alors à la médiane. La forme et l'intégrale de la distribution étant conservées d'un pixel à un autre, on comprend alors qu'un tel fractile permet d'obtenir une relation directe entre l'amplitude et l'énergie. Ainsi, pour chaque distribution notée Dn correspondant à chaque pixel noté n, le fractile à N% noté $F_n^{N\%}$ correspond à une amplitude $A_n^{N\%}$.

Sans correction particulière, les amplitudes $A_n^{N\%}$ sont différentes d'un pixel à un autre. Mais les pixels étant soumis à un rayonnement homogène, et compte tenu de la bonne qualité du détecteur, on considère que l'on peut raisonnablement attribuer une même valeur d'énergie $E^N$ à ce fractile, et cela pour l'ensemble des pixels considérés.

Ainsi, en déterminant, pour chaque pixel n, l'amplitude $A_n^{N\%}$ à laquelle correspond le fractile à N% noté $F_n^{N\%}$ de la distribution Dn, on obtient une correspondance simple entre la dite amplitude et l'énergie $E^N$ correspondant à ce fractile.

Le procédé de calibration selon l'invention comporte donc les différentes étapes suivantes :

Etape 1 : Mise en fonctionnement du générateur à rayons X à sa haute tension nominale, le générateur étant disposé de façon que le rayonnement X vu par le détecteur soit homogène, et préférentiellement perpendiculaire à la surface de réception dudit détecteur. On utilise avantageusement un générateur X et notamment le générateur équipant le dispositif de l'équipement de radiologie auquel appartient le détecteur. Cela permet de réaliser une calibration de tout ou partie des pixels à fréquence répétée, par exemple entre deux examens radiologiques. La distribution de l'amplitude mesurée sur chaque pixel a une forme voisine ou similaire de celle représentée en figure 3.

Etape 2 : Comptage, par l'électronique de traitement et de calibration, des impulsions émises par chaque pixel sous l'effet du rayonnement auquel est soumis le détecteur. A titre d'exemple, la figure 5 représente une voie de comptage. Elle comprend un pixel de détection 10, une électronique d'amplification 20, une électronique de traitement 21 assurant la mise en forme du signal, N comparateurs 22 comparant l'amplitude des impulsions à N seuils prédéterminés, N compteurs 23 associés à chacun des comparateurs précédents.

Durant la phase de calibration, il est d'ailleurs possible de n'utiliser qu'un seul comparateur, en faisant varier le seuil en amplitude au-delà duquel les impulsions sont comptées. On peut ainsi réaliser une multitude de comptages $C_m$, le détecteur étant irradié de la même façon, et comptabiliser seulement les impulsions dont l'amplitude excède un seuil $S_m$, ce seuil étant incrémenté entre chaque comptage. Ainsi, dans l'hypothèse ou on augmente la valeur du seuil $S_m$ entre chaque comptage $C_m$, autrement dit, si $S_m$ est supérieur à $S_{m-1}$ pour deux comptages $C_m$ et $C_{m-1}$, le nombre d'impulsions dont l'amplitude est comprise entre les valeurs $S_m$ et $S_{m-1}$ est le résultat du nombre d'impulsions comptées durant le comptage $C_m$ auquel on soustrait le nombre d'impulsions comptées durant le comptage $C_{m-1}$, les durées de comptage étant ici supposées identiques.

Alternativement, on peut non pas déterminer, lors de chaque mesure, des comptages, mais des taux de comptage. On établit alors une distribution en amplitude représentant, pour différentes valeurs d'amplitudes, non pas à une occurrence, mais à un taux d'occurrence, c'est-à-dire un nombre d'occurrences par unité de temps, ou taux de comptage.

D'autre part, d'autres méthodes connues de l'homme du métier peuvent être mises en oeuvre pour établir, sur chaque pixel, une distribution de l'amplitude des impulsions détectées lors de l'exposition à un flux photonique incident.

Les informations sont ensuite transmises sur un bus de lecture 24. On analyse la distribution de l'amplitude du signal mesuré par chaque pixel : il s'agit par exemple de l'histogramme des impulsions comptées classées selon leur amplitude. Comme indiqué précédemment, il peut s'agir de l'histogramme représentant les taux de comptage de chaque impulsion, les impulsions étant également classées selon leur amplitude. Le détecteur étant de bonne qualité, on peut estimer que, pour chaque pixel, l'intégrale de cette distribution est constante, ce qui signifie qu'il n'y a pas de variations importantes de sensibilité entre les pixels. De plus, le rayonnement incident étant homogène, cette distribution a une forme constante d'un pixel à un autre. Par contre, dû à la dérive électronique, cette distribution peut subir un décalage en amplitude, ce décalage variant selon les pixels et selon le temps. Le seuil est déterminé par un indicateur statistique de cette distribution. Il peut s'agir d'un fractile à N% de cette distribution, le seuil correspond à une amplitude au dessous de laquelle on trouve N% de l'intégrale de la distribution, c'est-à-dire N% des impulsions comptées durant cette phase de calibration. On peut utiliser d'autres indicateurs statistiques comme la moyenne par exemple, mais les fractiles à N% sont les indicateurs préférés. Ainsi, en soumettant l'ensemble des pixels à une même exposition homogène en énergie et en intensité, on détermine, sur chaque pixel, un indicateur. Cet indicateur peut correspondre, pour les différents pixels, à diverses valeurs en amplitudes, mais, pour l'ensemble des pixels considérés il correspond à une même énergie déposée dans le détecteur. On a alors établi, pour chacun des pixels, une correspondance entre amplitude et énergie.

Selon un mode préférentiel de l'invention, on peut « seuiller » les impulsions en fonction de cet indicateur, c'est-à-dire ne retenir, par exemple, que les impulsions dont l'amplitude est supérieure à ce seuil. Les différents seuils en amplitude des différents pixels correspondent à la même énergie. On comprend alors qu'en réalisant un tel seuillage en amplitude sur chacun des pixels, on réalise un seuillage à un même niveau d'énergie pour l'ensemble des pixels. En utilisant différents indicateurs, on aboutit à différents seuils en amplitude, correspondant chacun à différents niveaux d'énergies, ces différents niveaux d'énergie étant les mêmes pour l'ensemble des pixels. En déterminant plusieurs seuils notés Th(i), il est ensuite possible de réaliser des images correspondant à une bande d'énergie rassemblant les impulsions dont l'amplitude est comprise entre deux de ces seuils Th(i) et Th(i+1).

La figure 4 représente ainsi, pour un pixel donné, le nombre d'impulsions $N_D$ reçues en fonction de l'énergie E. sur cette figure, cinq seuils Th(i) sont définis. Le premier seuil Th(1) peut être défini en fonction du bruit acceptable pour une application donnée. Le bruit de comptage $N_B$ représenté par une courbe en pointillés sur la figure 4 est fonction du bruit électronique de l'amplificateur et dépend de la proximité ou non du premier seuil. Il peut être avantageux de soustraire cette valeur de bruit pour ne pas fausser la mesure de la première bande d'énergie.

Etape 3 : Ajustement, par l'électronique de traitement et de calibration, des niveaux de seuil de chaque pixel de façon que chaque seuil en amplitude corresponde à une même énergie pour l'ensemble des pixels.

Le nombre d'impulsions correspondant à un seuil donné peut être calibré initialement par différentes méthodes qui peuvent être plus ou moins complexes à mettre en oeuvre, utilisant notamment des sources parfaitement calibrées. Par contre, l'ajustement pixel à pixel selon l'invention utilisant le générateur X à sa tension nominale peut se faire régulièrement pour tenir compte des dérives électroniques et de la non stabilité du matériau semi-conducteur. Une telle calibration rapide peut se faire avant chaque passage de patient dans le cas d'un scanner médical ou entre deux bagages lors d'un contrôle sur une chaîne de détection de produits suspects fonctionnant en continu. Ainsi, on peut procéder à des calibrations peu avant, ou peu après l'utilisation du dispositif de radiologie. On limite alors les effets de dérive énoncés ci-dessus.

Un autre avantage particulièrement important de l'invention est que cette calibration peut-être réalisée en utilisant le même générateur que celui utilisé lors des examens médicaux. Aucune source supplémentaire de rayonnement X n'est requise.

Un tel procédé permet d'améliorer nettement la stabilité de réponse des détecteurs semi-conducteurs, particulièrement pour l'imagerie scanner qui nécessite une très grande stabilité et une grande reproductibilité de la mesure.

**Revendications**

1. Procédé de calibration d'un système de détection de rayonnement X, ledit système comprenant au moins un générateur de rayonnement X et un ensemble de détection comprenant une matrice de pixels (10) détecteurs semi-conducteurs et une électronique de traitement et de calibration (20, 21 22, 23), le procédé de calibration comportant, pour tout ou partie des pixels, les différentes étapes suivantes :

   - Mise en fonctionnement du générateur à rayons X à sa haute tension nominale, le générateur étant disposé face au détecteur ;
   - Comptage, par l'électronique de traitement et de calibration, des impulsions émises par chaque pixel sous l'effet du rayonnement produit par le générateur ;
   - Pour chaque pixel, classement des impulsions selon leur amplitude et établissement d'une distribution en amplitude des impulsions comptées ;
   - Pour chaque distribution en amplitude, application d'un indicateur statistique, ledit indicateur statistique étant choisi parmi au moins un fractile et la moyenne de ladite distribution ;
   - Identification de l'amplitude correspondant à l'application dudit indicateur statistique à ladite distribution ;
   - Ajustement, par l'électronique de traitement et de calibration, des paramètres de calibration de chaque pixel, tenant compte de la relation amplitude-énergie ainsi établie.

2. Procédé de calibration selon la revendication 1, **caractérisé en ce que** l'indicateur statistique relatif à ladite distribution en amplitude étant un fractile, correspondant à la médiane de ladite distribution.

3. Procédé de calibration selon la revendication 1, **caractérisé en ce que** l'indicateur statistique est une combinaison de différents fractiles.

4. Procédé de calibration selon l'une des revendications 1 à 3, **caractérisé en ce que**, sur chaque pixel, la valeur d'énergie correspondant à l'amplitude du signal correspondant audit indicateur est traitée comme étant un seuil en énergie (Th(i)) par l'électronique de traitement et de calibration du pixel.

5. Procédé de calibration selon la revendication 4, **caractérisé en ce que** le seuil de plus bas niveau (Th(1)) est situé au-dessus du bruit électronique de l'électronique de traitement.

6. Procédé de calibration selon les revendications 4 ou 5, **caractérisé en ce que** les impulsions dont l'amplitude est inférieure audit seuil ne sont pas traitées par l'électronique de traitement et de calibration du pixel.

7. Procédé de calibration selon la revendication 4, **caractérisé en ce que** l'électronique de traitement et de calibration du pixel détermine au moins une fenêtre d'énergie, ladite fenêtre étant comprise entre un premier seuil et un second seuil.

8. Procédé de calibration selon la revendication 7, **caractérisé en ce que** l'électronique de traitement et de calibration du pixel divise chaque distribution en autant de fenêtres d'énergie.

9. Procédé de calibration selon la revendication 8, **caractérisé en ce que** l'opération de division de chaque distribution reçue par chaque pixel en autant de fenêtres d'énergie est réalisée pour l'ensemble des pixels de la matrice de détection.

10. Procédé de calibration selon la revendication 8, **caractérisé en ce que** l'opération de division de chaque distribution reçue par chaque pixel en autant de fenêtres d'énergie est réalisée pour certains pixels de la matrice de détection.

11. Procédé de calibration selon l'une des revendications 1 à 10, **caractérisé en ce que** le procédé de calibration est effectué systématiquement entre deux mesures du système de détection.


**Patentansprüche**

1. Kalibrierverfahren eines Röntgenstrahlen-Detektionssystems, wobei das System mindestens einen Röntgenstrahlen-Erzeuger und eine Detektionsgruppe umfasst, die eine Matrix für Halbleiter-Detektorpixel (10) und eine Verarbeitungs- und Kalibrierelektronik (20, 21, 22, 23) umfasst, wobei das Kalibrierverfahren für alle oder einen Teil der Pixel die folgenden verschiedenen Schritte aufweist:

- Inbetriebsetzen des Röntgenstrahlen-Erzeugers in seiner hohen Nennspannung, wobei der Erzeuger gegenüber dem Detektor angeordnet ist,
- Zählen der von jedem Pixel unter der Einwirkung der von dem Erzeuger produzierten Strahlung gesendeten Impulse durch die Verarbeitungs- und Kalibrierelektronik,
- Klassifizierung der Impulse gemäß ihrer Amplitude und Erstellung einer Amplitudenverteilung der gezählten Impulse für jedes Pixel,
- Anwendung eines statistischen Indikators für jede Amplitudenverteilung, wobei der statistische Indikator aus mindestens einem Fraktil und dem Durchschnitt der Verteilung ausgewählt ist,
- Identifizierung der Amplitude, die der Anwendung des statistischen Indikators auf die Verteilung entspricht,
- Justierung der Kalibrierparameter jedes Pixels unter Berücksichtung der derart erstellen Amplituden-Energie-Beziehung durch die Verarbeitungs- und Kalibrierelektronik.

2. Kalibrierverfahren nach Anspruch 1, **dadurch gekennzeichnet, dass** der statistische Indikator, der sich auf die Amplitudenverteilung bezieht, ein Faktil ist, der dem Medianwert der Verteilung entspricht.

3. Kalibrierverfahren nach Anspruch 1, **dadurch gekennzeichnet, dass** der statistische Indikator eine Kombination verschiedener Fraktile ist.

4. Kalibrierverfahren nach einem der Ansprüche 1 bis 3, **dadurch gekennzeichnet, dass**, auf jedem Pixel, der Energiewert, der der Amplitude des Signals entspricht, das dem Indikator entspricht, von der Verarbeitungs- und Kalibrierelektronik des Pixels als eine Energieschwelle (Th(i)) verarbeitet wird.

5. Kalibrierverfahren nach Anspruch 4, **dadurch gekennzeichnet, dass** sich die Schwelle des untersten Niveaus (Th(1)) über dem elektronischen Rauschen der Verarbeitungselektronik befindet.

6. Kalibrierverfahren nach den Ansprüchen 4 oder 5, **dadurch gekennzeichnet, dass** die Impulse, deren Amplitude unter der Schwelle liegt, von der Verarbeitungs- und Kalibrierelektronik des Pixels nicht verarbeitet werden.

7. Kalibrierverfahren nach Anspruch 4, **dadurch gekennzeichnet, dass** die Verarbeitungs- und Kalibrierelektronik des Pixels mindestens ein Energiefenster bestimmt, wobei das Fenster zwischen einer ersten Schwelle und einer zweiten Schwelle inbegriffen ist.

8. Kalibrierverfahren nach Anspruch 7, **dadurch gekennzeichnet, dass** die Verarbeitungs- und Kalibrierelektronik des Pixels jede Verteilung in genauso viele Energiefenster teilt.

9. Kalibrierverfahren nach Anspruch 8, **dadurch gekennzeichnet, dass** der Teilungsvorgang jeder von jedem erhaltenen Pixel erhaltenen Verteilung in genauso viele Energiefenster für alle Pixel der Erkennungsmatrix durchgeführt wird.

10. Kalibrierverfahren nach Anspruch 8, **dadurch gekennzeichnet, dass** der Teilungsvorgang jeder von jedem erhaltenen Pixel erhaltenen Verteilung in genauso viele Energiefenster für bestimmte Pixel der Erkennungsmatrix durchgeführt wird.

11. Kalibrierverfahren nach einem der Ansprüche 1 bis 10, **dadurch gekennzeichnet, dass** das Kalibrierverfahren systematisch zwischen zwei Messungen des Detektionssystems durchgeführt wird.

**Claims**

1. A method for calibrating an x-ray detection system, said system comprising at least one x-ray generator and a detection assembly comprising a matrix of semi-conductor detector pixels (10) and processing and calibrating electronics (20, 21, 22, 23), said calibration method comprising, for all or part of the pixels, the following different steps:

   - operating the x-ray generator at its nominal high voltage, said generator being disposed opposite said detector;
   - counting, using said processing and calibrating electronics, the pulses emitted by each pixel under the effect of the radiation produced by said generator;
   - classifying, for each pixel, the pulses according to their amplitude, and establishing an amplitude distribution of the counted pulses;
   - applying, for each amplitude distribution, a statistical indicator, said statistical indicator being selected from among at least one fractile and the mean of said distribution;
   - identifying the amplitude corresponding to the application of said statistical indicator to said distribution;
   - adjusting, using said processing and calibrating electronics, the calibration parameters of each pixel, taking into account the amplitude-energy relation thus established.

2. The calibration method according to claim 1, **characterised in that** said statistical indicator relating to said amplitude distribution is a fractile, corresponding to the median of said distribution.

3. The calibration method according to claim 1, **char-**

**acterised in that** said statistical indicator is a combination of various fractiles.

4. The calibration method according to any one of claims 1 to 3, **characterised in that**, on each pixel, the energy value corresponding to the signal amplitude corresponding to said indicator is treated as an energy threshold (Th(i)) by said pixel processing and calibrating electronics.

5. The calibration method according to claim 4, **characterised in that** the lowest level threshold (Th(1)) is located above the electronic noise of said processing electronics.

6. The calibration method according to claim 4 or 5, **characterised in that** the pulses with amplitude less than said threshold are not processed by said pixel processing and calibrating electronics.

7. The calibration method according to claim 4, **characterised in that** said pixel processing and calibrating electronics determine at least one energy window, said window being between a first threshold and a second threshold.

8. The calibration method according to claim 7, **characterised in that** said pixel processing and calibrating electronics divide each distribution into an equivalent number of energy windows.

9. The calibration method according to claim 8, **characterised in that** the operation of dividing each distribution received by each pixel into an equivalent number of energy windows is carried out for all of the pixels of the detection matrix.

10. The calibration method according to claim 8, **characterised in that** the operation of dividing each distribution received by each pixel into an equivalent number of energy windows is carried out for some pixels of the detection matrix.

11. The calibration method according to any one of claims 1 to 10, **characterised in that** said calibration method is systematically carried out between two measurements of the detection system.

# FIG. 1

# FIG. 2

Energie

0    20    40    60    80    100    120    keV

# FIG. 3

# FIG. 4

FIG. 5

EP 2 507 652 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 7479639 B

- WO 2009122317 A

12